# EUROPÄISCHE PATENTANMELDUNG

(11) **EP 0 598 166 A1**
(43) Veröffentlichungstag der Anmeldung: **25.05.1994**
(21) Anmeldenummer: 92810888.5
(22) Anmeldetag: 16.11.1992
(51) Int. Cl.: B65D 88/16, B65D 88/12

(54) **Flexibler Mehrweg-Müllsack**

(71) Anmelder: CIBA-GEIGY AG, CH-4002 Basel (CH)
(72) Erfinder: Krause, Eberhard, CH-4125 Riehen (CH)

(57) **Zusammenfassung**

Ein flexibler Mehrweg-Hüllsack (1) zur Verpackung einer grösseren Menge eines Stückguts, insbesondere von pulvermörmiges Gut enthaltenden Säcken, weist eine verschliessbare Öffnung zum Befüllen und Entleeren seines Innenraums (13) auf. Er ist mit zwei langen Reissverschlüssen (20,21) oder alternativ mit einem Doppelreissverschluss oder mit einer Anzahl Klettverschlüssen versehen, die so angeordnet sind, dass bei geöffneten Reiss- oder Klettverschlüssen der Innenraum (13) des Hüllsacks (1) zumindest von zwei aufeinander senkrecht stehenden Richtungen zugänglich ist. Ferner ist der Hüllsack (1) auf einen Bruchteil des maximalen Volumens seines Innenraums (13) zusammenlegbar.

## Beschreibung

Die Erfindung betrifft einen flexiblen Mehrweg-Hüllsack zur Verpackung einer grösseren Menge eines Stückguts gemäss dem Oberbegriff des unabhängigen Patentanspruchs.

Umhüllungen zum Schutz für vielerlei Güter sind heute praktisch auf allen Gebieten bekannt und auch im Einsatz. Pulverförmiges Gut wird dabei entweder direkt in sehr grosse Kunststoffsäcke, sogenannte Bulk-bags, eingefüllt und darin versandt, oder es wird in kleinere Papier- oder Kunststoffsäcke eingefüllt, die dann als Stückgut zu grösseren Stückzahlen in einen Behälter hineingepackt werden, bevor dieser dann versandt wird.

Bei den obenerwähnten Bulk-bags handelt es sich um sehr grosse Kunststoffsäcke, die an ihrem unteren Ende fest zusammengebunden sind, und die von oben her mit dem pulverförmigen Gut befüllt werden, bis sie gefüllt sind, und dann am oberen Ende ebenfalls zusammengebunden werden. Diese Bulk-bags können dann zum Entleeren einfach über die Öffnung eines grossen Trichters gehalten und geöffnet werden, so dass das pulverförmige Gut aus dem Kunststoffsack nach unten aus dem Sack heraus in den Trichter hinein fallen kann. Diese Bulk-bags haben allerdings einen recht wesentlichen Nachteil, nämlich dass sie zum Transportieren nicht einfach auf eine Palette gestellt werden können, da sie bei der Einwirkung von entsprechenden Kräften noch umkippen können. Ausserdem haftet nach der Entleerung des Bulk-bags oftmals noch Pulver an den Innenwänden des Bulk-bags, sodass das Bulk-bag vor seiner Verbrennung oder seiner Wiederverwendung zunächst einmal gereinigt werden muss, was einen nicht unerheblichen Aufwand bedeutet und einer direkten und einfachen Wiederverwendung im Wege steht.

Stückgut, insbesondere pulverförmiges Gut enthaltende Säcke, wird oft in Einweg- und Mehrwegbehältern aus Stahl, Kunststoff, Holz oder Wellpappkartons verpackt. Diese Art und Weise der Verpackung ist sehr gängig, weist aber eine Anzahl von Nachteilen auf. So weisen derartige Verpackungen zum Beipspiel ein vergleichsweise hohes Verpackungsgewicht (Tara) auf, was die Transportkosten erhöht. Zudem sind die Behälter sehr sperrig und absolut unflexibel und bedürfen eines grossen Platzbedarfs beim Aufstellen. Ferner ist der Materialaufwand für solche Behälter hoch, sodass sie vergleichsweise teuer sind. Ausserdem ist der Behälterinnenraum oft nur schwer zugänglich, was das Beladen und Entladen solcher Behälter erheblich erschwert. Zumeist sind solche Behälter auch nicht zusammenlegbar oder zusammenklappbar für den Rücktransport und bei den Behältern, die zusammenklappbar sind, beträgt das Restvolumen des zusammenklappbaren Behälters dann in der Regel mindestens 10%-20% des normalen Behältervolumens und nimmt damit noch relativ viel Platz in Anspruch. Im Falle von Wellpappkartons kommt noch dazu, dass der Schutz gegen Beschädigungen beim Transport ungenügend sein kann, sowohl im Hinblick auf mechanisch bedingte Beschädigungen als auch insbesondere im Hinblick auf witterungsbedingte Schäden. Ausserdem ist auch das Verpackungsmaterial bei dieser Art von Verpackung entweder nur schlecht oder gar nicht mehr wiederverwendbar. Auch der Schutz vor unbefugtem Zugriff auf den Inhalt ist nur gering.

Es ist daher eine Aufgabe der Erfindung, einen flexiblen Mehrweg-Behälter zu schaffen, der die vorstehend genannten Nachteile zumindest stark verringert oder gar nicht mehr aufweist.

Diese Aufgabe wird gemäss der Erfindung durch einen Hüllsack gelöst, der Hüllsack mit zwei langen Reissverschlüssen oder einem Doppelreissverschluss oder mit einer Anzahl Klettverschlüssen versehen ist. Die zwei Reissverschlüsse bzw. der Doppelreissverschluss oder die Klettverschlüsse sind so angeordnet, dass bei geöffneten Reissverschlüssen, Doppelreissverschluss oder Klettverschlüssen der Innenraum des Hüllsacks zumindest von zwei aufeinander senkrecht stehenden Richtungen zugänglich ist, und dass der Hüllsack auf einen Bruchteil des maximalen Volumens seines Innenraums zusammenlegbar ist. Der erfindungsgemässe Hüllsack weist ein geringes Verpackungsgewicht (Tara) auf, was die Transportkosten senkt. Zudem ist er flexibel und bedarf keines so grossen Platzbedarfs beim Aufstellen wie ein sperriger, unflexibler Behälter. Ferner ist der Materialaufwand für solche Behälter sehr gering, sodass sie vergleichsweise billig sind. Ausserdem ist der Innenraum des Hüllsacks bei geöffneten Reissverschlüssen, geöffnetem Doppelreissverschluss oder geöffneten Klettverschlüssen sehr leicht zugänglich, was das Beladen und Entladen solcher Hüllsäcke erheblich vereinfacht. Der Hüllsack ist einfach zusammenlegbar für den Rücktransport und das Restvolumen des zusammengelegten Behälters beträgt nur noch einen Bruchteil von beispielsweise 2% oder noch weniger des normalen Behältervolumens und nimmt damit nur einen sehr geringen Platz in Anspruch. Auch der Schutz gegen Beschädigungen beim Transport ist sowohl im Hinblick auf mechanisch bedingte Beschädigungen als auch im Hinblick auf witterungsbedingte Schäden insbesondere gegenüber den Verpackungen aus Wellpappkarton deutlich besser. Ausserdem ist auch das Verpackungsmaterial bei dieser Art von Verpackung direkt wiederverwendbar. Auch der Schutz vor unbefugtem Zugriff auf den Inhalt ist vergleichsweise hoch, da die Enden der Reissverschlüsse mit einem Schloss versehen werden können.

Ein besonders vorteilhaftes Ausführungsbeispiel des erfindungsgemässen Hüllsacks ist im wesentlichen quaderförmig ausgebildet. Die Reiss- oder Klettverschlüsse sind dabei entlang der Kanten des Quaders so angeordnet, dass bei geöffneten Reiss- oder Klettverschlüssen zwei Begrenzungsflächen des quaderförmigen Hüllsacks gemeinsam wegklappbar sind. Dieses Ausführungsbeispiel zeichnet sich zusätzlich durch eine einfache Handhabbarkeit aus.

Die Reiss- oder die Klettverschlüsse können zumindest entlang von fünf aneinander anschliessenden Kanten der gemeinsam wegklappbaren Begrenzungsflächen angeordnet sein und diese zwei Flächen symmetrisch umrahmen. Sie können auch die beiden Flächen gesamthaft umrahmen, also auch noch entlang der sechsten Kante angeordnet sein. Dies ist dann vorteilhaft, wenn diese beiden Flächen gänzlich abnehmbar sein sollen.

Zweckmässigerweise können die zwei wegklappbaren Begrenzungsflächen des Hüllsacks die Deckenfläche und eine Seitenfläche sein.

Ein weiteres Ausführungsbeispiel des Hüllsacks zeichnet sich dadurch aus, dass Trageeinrichtungen, insbesondere Trageschlaufen, in der Nähe der vier oberen Ecken des quaderförmigen Hüllsacks vorgesehen sind. Der Hüllsack kann so leicht mit Hilfe eines Gabelstaplers, dessen Gabeln jeweils durch zwei Schlaufen greifen können, mit Hilfe eines Krans oder einer ähnlichen Tragehilfe gehoben bzw. versetzt werden.

Ein weiteres Ausführungsbeispiel des Hüllsacks ist mit einer von aussen zugänglichen Informationsfahne versehen. Diese Informationsfahne kann beispielsweise Informationen über den Inhalt des Hüllsacks, über die Häufigkeit, mit der der Hüllsack bereits benutzt wurde, etc., umfassen.

Ein besonders zweckmässiges Ausführungsbeispiel des Hüllsacks ist aus einem Geflecht aus einem umweltunschädlich abbaubaren oder rezyklierbaren Material, beispielsweise aus aus Polypropylen-Bändchen, hergestellt. Ein solches Material ist entweder in umweltunschädliche Bestandteile verbrennbar oder vollständig wiederverwertbar, und weist obendrein eine sehr hohe Reissfestigkeit aus und kann mithin für grössere Lasten verwendet werden.

Besonders vorteilhaft ist auch ein Ausführungsbeispiel des Hüllsacks, das normierte Transportabmessungen aufweist. Ein solcher Hüllsack ist entweder gut auf normierte Paletten aufsetzbar. Er ist leicht stapelbar und kann gegebenenfalls auch in Normcontainern transportiert werden.

Im folgenden wird die Erfindung anhand der Zeichnung näher erläutert; es zeigen in schematischer Darstellung:
Fig. 1 ein Ausführungsbeispiel eines geschlossenen Hüllsacks auf einer Palette,
Fig. 2 den Hüllsack der Fig. 1 mit einigen Säcken befüllt, in geöffnetem Zustand,
Fig. 3 ein weiteres Ausführungsbeispiel des erfindungsgemässen Hüllsacks,
Fig. 4 den Hüllsack der Fig. 3 vollständig mit Säcken befüllt, in geöffnetem Zustand
   und
Fig. 5 einen erfindungsgemässen Hüllsack, zusammengefaltet.

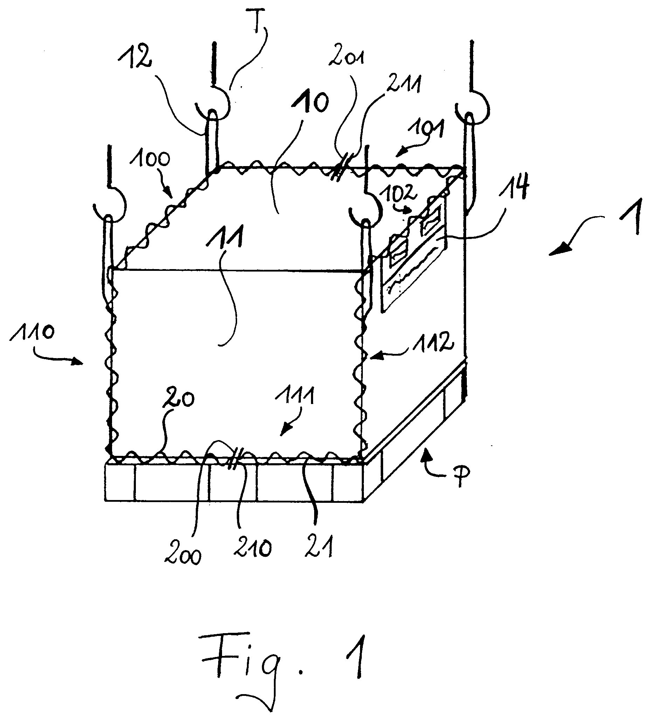

In dem in Fig. 1 gezeigten Ausführungsbeispiel des erfindungsgemässen Hüllsacks 1 in geschlossenem Zustand sind bezeichnet mit 10 die Deckenfläche und mit 11 die vordere Seitenfläche des quaderförmigen Hüllsacks 1. Der Hüllsack steht auf einer Palette P. In der Nähe der vier oberen Ecken des quaderförmigen Hüllsacks 1 sind Trageschlaufen 12 in der Nähe der vier oberen Ecken des Hüllsacks vorgesehen, in die Tragemittel T, die hier häkenförmig angedeutet sind, eingreifen können. Ferner sind entlang von allen sechs Kanten 100,101,102,110,111 und 112, die die Deckenfläche 10 und die vordere Seitenfläche 11 umrahmen, Reissverschlüsse 20 und 21 vorgesehen. Die Enden 200,201 und 210,211 der Reissverschlüsse sind jeweils etwa in der Mitte der Kanten 101 und 111 vorgesehen. Ferner ist aussen aussen am Hüllsack noch eine Informationsfahne 14 vorgesehen.

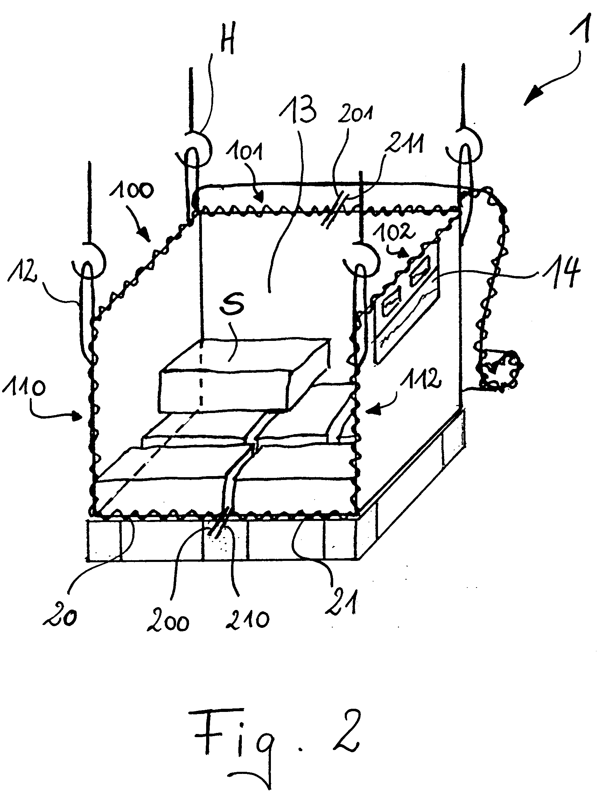

Um den in Fig. 1 dargestellten geschlossenen Hüllsack 1 zu öffnen, zieht der Benutzer den jeweiligen Reissverschluss 20 bzw. 21 beim Ende 200 bzw. 210 beginnend entlang der Kanten 110 und 100 bzw. 112 und 102 auf. Anschliessend kann die vordere Seitenfläche 11 zusammen mit der Deckenfläche 10 aus der Zeichenebene heraus nach hinten weggeklappt werden. Dieser Zustand mit weggeklappter vorderer Seitenfläche 11 und Deckenfläche 10 ist in Fig. 2 dargestellt, wobei gleiche Teile mit gleichen Bezugszeichen versehen sind. Weiterhin sind im Innenraum 13 des Hüllsacks 1 einige Säcke S angedeutet, die das Stückmaterial repräsentieren, das zum Transport in den Innenraum 13 des Hüllsacks 1 eingelagert wird. Aus dieser Darstellung erkennt man gut, dass der Innenraum 13 des auf der Palette P stehenden Hüllsacks 1 sowohl von vorne als auch von oben sehr gut zugänglich ist, mithin die Säcke S also sehr einfach aus dem Innenraum 13 entnommen werden können.

Die Reissverschlüsse 20 und 21 können auch ganz bis zu ihrem anderen Ende 201 bzw. 211, also bis etwa in die Mitte der Kante 101 aufgezogen werden, sodass die vordere Seitenfläche 11 und die Deckenfläche 10 ganz abgenommen werden können, also vom Hüllsack 1 getrennt werden können. Ausserdem ist es selbstverständlich auch möglich, die Reissverschlüsse 20 und 21 so auszubilden, dass sie von ihrem Ende 201 bzw. 211 beginnend entlang der Kanten 100 und 110 bzw. 102 und 112 aufgezogen werden können, so dass die Deckenfläche 10 und die vordere Seitenfläche 11 aus der Zeichenebene heraus nach vorne heruntergeklappt werden können, oder dass die Reissverschlüsse 20 bzw. 21 ganz bis zu ihrem Ende 200 bzw. 210 in der Mitte der Kante 101 aufgezogen werden, sodass die Deckenfläche 10 und die vordere Seitenfläche 11 ganz vom Hüllsack abgenommen werden können.

Ferner ist aus der Fig. 1 und der Fig. 2 auch zu entnehmen, dass der Hüllsack 1 mit einer von aussen zugänglichen Informationsfahne 14 versehen ist. Diese Informationsfahne 14 kann beispielsweise Informationen über den Inhalt des Hüllsacks, über die Häufigkeit, mit der der Hüllsack bereits benutzt wurde, etc., umfassen. Auf diese Weise ist es möglich, von aussen abzulesen, welche Art Stückgut in dem Hüllsack enthalten ist und auch abzulesen, wie oft der Hüllsack schon im Einsatz war. Nach einer bestimmten Anzahl von Einsätzen kann dann der Hüllsack aus dem Verkehr gezogen und beispielsweise rezykliert werden.

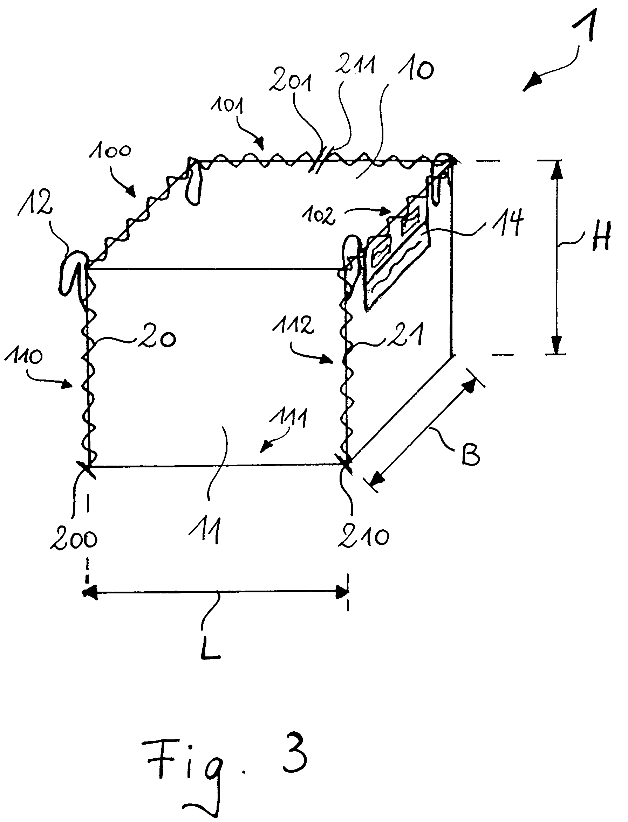

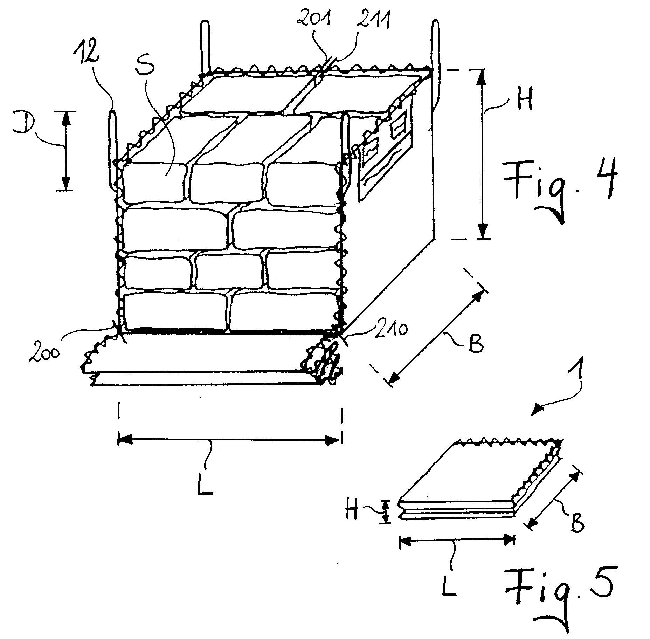

Ein weiteres Ausführungsbeispiel des erfindungsgemässen Hüllsacks ist in Fig. 3 dargestellt, wobei gleiche Teile mit den gleichen Bezugszeichen bezeichnet sind wie in Fig. 1 und Fig. 2. Dieses Ausführungsbeispiel unterscheidet sich zu dem vorher beschriebenen dadurch, dass die Reissverschlüsse 20 bzw. 21 vom Ende 201 bzw. 211 beginnend aufgezogen werden, sodass die Deckenfläche 10 und die vordere Seitenfläche 11 nach vorne aus der Zeichenebene heraus heruntergeklappt werden können. Dabei sind die Enden 200 bzw. 210 aber nicht wie beim ersten Ausführungsbeispiel in der Mitte der Kante 111 vorgesehen, sondern am Ende der Kante 110 bzw. 112. Der so geöffnete Hüllsack 1 ist in Fig. 4 dargestellt, wobei hier im Innenraum 13 wieder Säcke S angedeutet sind, die das Stückgut repräsentieren, das in dem Hüllsack transportiert werden kann.

Auch hier ist selbstverständlich wieder der umgekehrte Fall möglich: Die Enden 200 bzw. 210 können in der Mitte der Kante 111 vorgesehen sein und die anderen Enden 201 bzw. 211 am hinteren Ende der Kante 100 bzw. 102. Dann kann die vordere Seitenfläche 11 zusammen mit der Deckenfläche 10 aus der Zeichenebene heraus nach hinten weggeklappt werden.

In Fig. 5 ist angedeutet, dass der entleerte Hüllsack 1 auf einen Bruchteil des maximalen Volumens seines Innenraums 13 zusammengefaltet werden kann. Dieser Bruchteil kann nur etwa 2% oder noch weniger des maximalen Volumens des Innenraums 13 betragen, sodass beim Rücktransport der Hüllsack nur sehr wenig Platz beansprucht.

Die Abmessungen des Hüllsacks 1 können so ausgewählt sein, dass sie Normabemssungen entprechen, dass also ein beladener Hüllsack auf eine Normpalette oder in einen Normtransportcontainer hineinpasst und mithin ohne Probleme gestapelt werden kann. Die Normmasse des Hüllsacks können beispielsweise in der Länge L = 1200 mm, in der Breite B = 1000 mm und in der Höhe H = 900 mm betragen. Der zusammengefaltete Hüllsack 1 kann dann beispielsweise Abmessungen von nur noch L = 600 mm, B = 50 mm und H = 60 mm aufweisen, wodurch das Volumen des zusammengefalteten Hüllsacks auf etwa 0.17% des maximalen Volumens seines Innenraums 13 reduziert wird.

Die Trageschlaufen 12 können eine Länge D von beispielsweise 250 mm aufweisen. Dies ist eine komfortable Länge der Halteschlaufen 12, sodass auf einfache Weise Tragemittel wie die angedeuteten Haken H in die Halteschlaufen 12 eingreifen können, es kann aber auch jeweils durch zwei Halteschlaufen 12 hindurch ein Gabelarm eines Gabelstaplers hindurchgreifen, so dass der Hüllsack 1 samt Inhalt mit Hilfe eines Gabelstaplers leicht transprotiert werden kann. Natürlich ist der Transport des auf einer Palette P stehenden beladenen Hüllsacks 1 mit Hilfe eines Gabelstaplers ebenfalls leicht möglich, indem die Gabelarme des Gabelstaplers unter die Palette P greifen und die Palette P mitsamt dem daraufstehenden Hüllsack transportieren können.

Der Hüllsack 1 ist vorteilhafterweise aus einem Geflecht oder Gewebe aus einem umweltunschädlich abbaubaren oder rezyklierbaren Material, beispielsweise aus aus Polypropylen-Bändchen, hergestellt. Ein solches Material ist entweder in umweltunschädliche Bestandteile verbrennbar oder vollständig wiederverwertbar (rezyklierbar), und weist obendrein eine sehr hohe Reissfestigkeit aus und kann mithin für grössere Lasten verwendet werden. Lasten von bis zu 1000 kg und mehr können leicht in einem solchen Hüllsack transportiert werden. Alternativ zu einem Geflecht oder Gewebe aus Polypropylen-Bändchen kommt auch ein Geflecht oder Gewebe aus Naturfaser wie Baumwolle oder aus Kunstfaser in Frage. Auf diese Gewebe können auch sehr einfach Informationen über den Inhalt des Hüllsacks, Werbung etc. aufgedruckt werden.

Alternativ zu den bisher beschriebenen Reissverschlüssen kommen auch andere belastbare Verschlussarten in Frage, insbesondere soll an dieser Stelle auf Klettverschlüsse als Alternative verwiesen werden. Reissverschlüsse weisen den Vorteil auf, dass relativ leicht unbefugter Zugriff auf den Inhalt des Hüllsacks 1 verhindert werden kann, indem beispielsweise ein Schloss in die Läufer der beiden Reissverschlüsse 20 und 21 eingehängt wird, nachdem die Reissverschlüsse geschlossen sind. Soll nur festgestellt werden ob, der Hüllsack überhaupt geöffent wurde, kann auch eine Plombierung der Reissverschlussläufer erfolgen, nachdem die Reissverschlüsse geschlossen sind. Es ist selbstverständlich, dass anstelle von zwei separaten Reissverschlüssen selbstverständlich auch ein Doppelreissverschluss verwendet werden kann.

Der Innenraum des Hüllsacks ist gut und einfach zugänglich. Ferner ist der Hüllsack auf einen Bruchteil des maximalen Volumens seines Innenraums zusammenlegbar. Der erfindungsgemässe Hüllsack weist ein geringes Verpackungsgewicht (Tara) auf, was die Transportkosten senkt. Zudem ist er flexibel und bedarf keines so grossen Platzbedarfs beim Aufstellen wie ein sperriger, unflexibler Behälter. Ferner ist der Materialaufwand für solche Behälter sehr gering, sodass sie vergleichsweise billig sind. Ausserdem ist der Innenraum des Hüllsacks bei geöffneten Reissverschlüssen, geöffnetem Doppelreissverschluss oder geöffneten Klettverschlüssen sehr leicht zugänglich, was das Beladen und Entladen solcher Hüllsäcke erheblich vereinfacht. Der Hüllsack ist einfach zusammenlegbar für den Rücktransport und das Restvolumen des zusammengelegten Behälters beträgt nur noch einen Bruchteil von beispielsweise 2% oder noch weniger des normalen Behältervolumens und nimmt damit nur einen sehr geringen Platz in Anspruch. Auch der Schutz gegen Beschädigungen beim Transport ist sowohl im Hinblick auf mechanisch bedingte Beschädigungen als auch im Hinblick auf witterungsbedingte Schäden insbesondere gegenüber den Verpackungen aus Wellpappkarton deutlich besser. Ausserdem ist auch das Verpackungsmaterial bei dieser Art von Verpackung direkt wiederverwendbar. Auch der Schutz vor unbefugtem Zugriff auf den Inhalt ist vergleichsweise hoch, da die Enden der Reissverschlüsse mit einem Schloss versehen werden können.

## Patentansprüche

1. Flexibler Mehrweg-Hüllsack zur Verpackung einer grösseren Menge eines Stückguts, insbesondere von pulvermörmiges Gut enthaltenden Säcken, welcher Hüllsack (1) eine verschliessbare Öffnung zum Befüllen und Entleeren seines Innenraums (13) aufweist, dadurch gekennzeichnet, dass der Hüllsack mit zwei langen Reissverschlüssen (20,21), mit einem Doppelreissverschluss oder mit einer Anzahl Klettverschlüssen versehen ist, die so angeordnet sind, dass bei geöffneten Reiss- oder Klettverschlüssen der Innenraum (13) des Hüllsacks (1) zumindest von zwei aufeinander senkrecht stehenden Richtungen zugänglich ist, und dass der Hüllsack (1) auf einen Bruchteil des maximalen Volumens seines Innenraums (13) zusammenlegbar ist.

2. Hüllsack nach Anspruch 1, dadurch gekennzeichnet, dass er im wesentlichen quaderförmig ausgebildet ist, und dass die Reissverschlüsse (20,21) oder Klettverschlüsse entlang von Kanten (100,101,102,110,111,112) des Quaders so angeordnet sind, dass bei geöffneten Reiss- oder Klettverschlüssen zwei Begrenzungsflächen (10,11) des quaderförmigen Hüllsacks (1) gemeinsam wegklappbar sind.

3. Hüllsack nach Anspruch 2, dadurch gekennzeichnet, dass die Reiss- oder die Klettverschlüsse zumindest entlang von fünf aneinander anschliessenden Kanten (100,101,102,110,112) der gemeinsam wegklappbaren Begrenzungsflächen (10,11) angeordnet sind und diese zwei Flächen symmetrisch umrahmen.

4. Hüllsack nach einem der Ansprüche 2 oder 3, dadurch gekennzeichnet, dass die zwei wegklappbaren Begrenzungsflächen (10,11) des Hüllsacks (1) die Deckenfläche (10) und eine Seitenfläche (11) sind.

5. Hüllsack nach einem der Ansprüche 2 bis 4, dadurch gekennzeichnet, dass Trageeinrichtungen, insbesondere Trageschlaufen (12), in der Nähe der vier oberen Ecken des quaderförmigen Hüllsacks vorgesehen sind.

6. Hüllsack nach einem der Ansprüche 1 bis 5, dadurch gekennzeichnet, dass er mit einer von aussen zugänglichen Informationsfahne (14) versehen ist.

7. Hüllsack nach einem der Ansprüche 1 bis 6, dadurch gekennzeichnet, dass er aus einem Geflecht oder einem Gewebe aus einem umweltunschädlich abbaubaren oder rezyklierbaren Material, beispielsweise aus Polypropylen-Bändchen, hergestellt ist.

8. Hüllsack nach einem der Ansprüche 1 bis 7, dadurch gekennzeichnet, dass er normierte Transportabmessungen (L,B,H) aufweist.
